Europäisches Patentamt

European Patent Office

Office européen des brevets

(11) Veröffentlichungsnummer: **0 154 121**

**B1**

(12) **EUROPÄISCHE PATENTSCHRIFT**

(45) Veröffentlichungstag der Patentschrift:
14.12.88

(21) Anmeldenummer: 85100330.1

(22) Anmeldetag: 15.01.85

(51) Int. Cl.⁴: **B 29 C 47/02** //
**B29K21/00, B29L31/26,**
**E06B1/64, E06B7/23**

(54) Verfahren zum Herstellen von Dichtungsstreifen und ähnlichen Profilsträngen aus Kautschuk und kautschukartigen Elastomeren.

(30) Priorität: 18.02.84 DE 3405973

(43) Veröffentlichungstag der Anmeldung:
11.09.85 Patentblatt 85/37

(45) Bekanntmachung des Hinweises auf die Patenterteilung:
14.12.88 Patentblatt 88/50

(84) Benannte Vertragsstaaten:
AT BE CH DE FR GB IT LI LU NL SE

(56) Entgegenhaltungen:
AT-B-312 909
AT-B-316 112
AT-B-341 194
DE-B-1 242 355
GB-A-861 312
GB-A-1 554 941
US-A-3 956 056

(73) Patentinhaber: Continental Aktiengesellschaft,
Königsworther Platz 1, D-3000 Hannover 1 (DE)

(72) Erfinder: Bernitz, Bernhard, Langenforther Strasse
60, D-3000 Hannover (DE)
Erfinder: Hermann, Dietmar. Dipl.- Ing.,
Kantstrasse 8, D-3008 Garbsen 6 (DE)
Erfinder: Brodmann, Richard, Sadebuschstrasse 15,
D-3000 Hannover 21 (DE)

**Beschreibung**

Die Erfindung bezieht sich auf Verfahren zum Herstellen von Dichtungsstreifen und/oder ähnlichen Profilsträngen aus Kautschuk und kautschukartigen Elastomeren mit in Teilbereichen ihres Querschnittsumfanges in haftender Verbindung aufgebrachten und über ihre ganze Länge durchlaufenden Belagstreifen aus andersartigen Stoffen, unter Verwendung einer Strangpresse mit einer formgebenden Strangpreßdüse gemäß dem Oberbegriff des Patentanspruchs.

Für die Einfassung von Türen oder Fenstern an Kraftfahrzeugen und in Gebäuden werden verschiedentlich Dichtungsstreifen benötigt, die einerseits aufgrund ihrer elastischen Verformbarkeit gegen Feuchtigkeit und Luftdurchtritt gut abdichten, die andererseits aber gegenüber auf- bzw. anliegenden und relativ zu ihnen beweglichen Glasscheiben oder Türflächen nicht die natürlicherweise vorgegebene hohe Haftreibung aufweisen. Es ist bekannt, die Dichtungsstreifen für solche Einsatzfälle bereichsweise mit einem reibungsmindernden Oberflächenbelag auszustatten. Die gleichen Umstände liegen vor, wenn z. B. aus ästhetischen Gründen andersfarbige oder anders strukturierte Streifen aufzubringen sind. In allen Fällen wird angestrebt, eine exponierte Außenfläche der Dichtungsstreifen mit einem vergleichsweise dünnen Belag aus einem von Kautschuk verschiedenen Stoff abzudecken.

Zur Herstellung solcher Dichtungsstreifen wurden die besagten Beläge bisher entweder durch Beflocken, Lackieren oder in ähnlicher Weise auf die fertigen Streifen aufgebracht oder in Form eines zusammenhängenden Belagstreifens mit den Dichtungsstreifen vereinigt und zusammen mit diesen der Fertigvulkanisation unterworfen.

Insbesondere war es aus der AT-B-312 909 sowie der GB-A-1 554 941 bekannt, Dichtungsstreifen maschinell mit dünnen Oberflächenbelägen zu versehen. Die Merkmale des Oberbegriffs sind aus der AT-B-312 909 bekannt.

Es zeigte sich jedoch, daß keines der bisher angewandten Verfahren zu einer Trennfestigkeit zwischen dem Grundkörper des Dichtungsstreifens und einem darauf aufgebrachten streifenförmigen Oberflächenbelag führte, die allen in der Praxis auftretenden Beanspruchungen standhielt, so daß sich die Aufgabe stellte, wirksame Maßnahmen aufzuzeigen, durch die die Gefahr einer Ablösung des Belag streifens von vornherein und auch bei Einwirkung starker Schwer- und Abzugskräfte beseitigt wurde.

Diese Aufgabe wird erfindungsgemäß durch die im kennzeichnenden Teil des Patentanspruchs angegebene Verfahrensweise gelöst.

Das erfindungsgemäße Verfahren zeichnet sich dadurch aus, daß es zu einer sowohl formschlüssigen als auch stoffschlüssigen Verbindung zwischen dem Belagstreifen und dem Kautschuk bzw. Elastomerstrang führt und somit die Gefahr einer späteren Ablösung des Belagstreifens sicher und endgültig beseitigt. Durch die erfindungsgemäße Kombination der angegebenen Maßnahmen - also die unterschiedlichen Oberflächeneigenschaften des Belagstreifens einerseits und die vollständige, oberflächenbündige Einbettung des Belagstreifens in die Profilstrang-Oberfläche andererseits - wird ein Dichtungsstreifen geschaffen, der sich durch außerordentliche Gebrauchstüchtigkeit auszeichnet.

Der durch die erfindungsgemäßen Maßnahmen in der Oberfläche des Dichtungsstreifens verankerte Belagstreifen kann auch durch die härtesten in der Praxis vorkommenden Beanspruchungen nicht mehr von dem Dichtungsstreifen abgelöst werden. Hinzu kommt, daß durch die gleitfähige Ausbildung der Außenoberfläche des Belagstreifens jegliche auf ihn einwirkenden äußeren Kräfte von vornherein reduziert werden und somit gar nicht wirksam an dem Belagstreifen angreifen können.

Die Erfindung ermöglicht in einfacher Weise die Erzeugung gleitfähiger Teilbereiche an verschiedenartig gestalteten Profilsträngen in praktisch unbegrenzten Längen gleichzeitig mit dem Formgeben der Stränge selbst. Als besonderer Vorteil erweisen sich dabei das Zusammenführen beider Komponenten unter Ausnutzung der sogenannten ersten Wärme der plastischen Elastomermischung unmittelbar vor bzw. schon in der formgebenden Strangpreßdüse und das einem kontinuierlichen Heißverpressen zu vergleichende gemeinsame Durchlaufen der Düse, woraus sich in direkter Folge eine außerordentlich feste Haftung ergibt. Dieser innige Zusammenhang wird in der abschließenden Vulkanisation dann gleichsam fixiert, so daß die fertigen Profilstreifen im späteren Gebrauch auch über enge räumliche Kurven gebogen und sogar scharf geknickt werden können, ohne daß die Belagstreifen örtliche Ablöseerscheinungen zeigen.

Eine zur Durchführung des erfindungsgemäßen Verfahrens geeignete Strangpresse weist zweckmäßig eine Leitvorrichtung zum Einführen des Belagstreifens in den ausgangsseitig von der Strangpreßdüse begrenzten Pressenkopf und zum Zusammenführen mit dem Profilstrang auf. Die Leitvorrichtung kann als unter einem spitzen Winkel zu der Austrittsrichtung des Profilstranges schräg an den Pressenkopf angesetzte Führungsbahn, wahlweise aber auch als entgegen der Austrittsrichtung des Profilstranges an die Außenwand der Strangpreßdüse angesetzte Führungsbahn ausgebildet sein, wobei im letzteren Falle die Führungsbahn vor der Strangpreßdüse innerhalb des Pressenkopfes eine Richtungsumkehrung über einen Winkel in einer Größenordnung bis zu 180° einschließt.

Zum Verdeutlichen der Erfindung sind Ausführungsbeispiele eines Profilstranges und verschiedener Herstellvorrichtungen in der Zeichnung schematisch dargestellt. Es zeigen:

Fig. 1 einen Abschnitt eines neuartigen Zweistoff-Dichtungsprofilstranges mit anliegendem Fensterglas in perspektivischer Ansicht, ausgehend von einem Querschnittsbild, und

Fig. 2 bis 4 den die Strangpreßdüse einschließenden Kopf einer zum Herstellen des Strangprofiles gemäß Fig. 1 geeigneten Strangpresse in verschiedenen Ausführungsbeispielen in Längsschnittdarstellung.

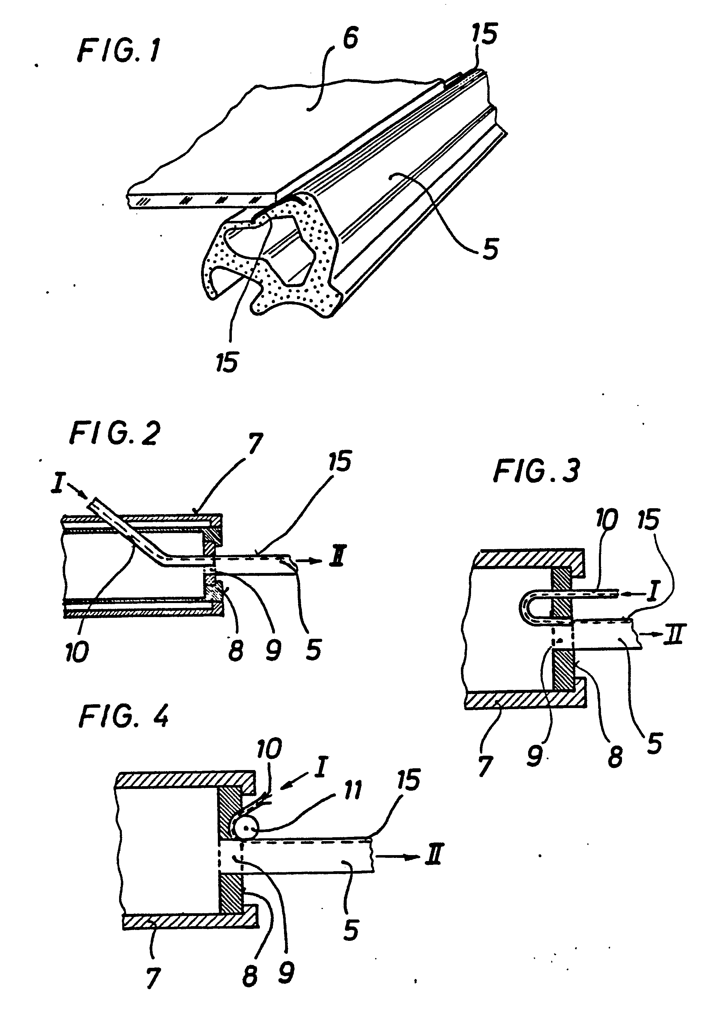

Der in Fig. 1 gezeichnete, beispielsweise als Dichtungsleiste für Fensterumrandungen in Kraftfahrzeugen verwendbare Profilstrang 5 ist überwiegend aus einem witterungsbeständigen Gummi hergestellt und nur in einem mit der Fensterscheibe 6 in gleitende Berührung tretenden begrenzen äußeren Umfangsabschnitt mit einem festhaftend aufgebrachten Belagstreifen 15 versehen. Der Belagstreifen 15, der aus einem Kunststoff, einen Textilgewebe, gegebenenfalls auch einem zwecks Reibungsminderung eigens vorbehandelten oder beschichteten Gewebe und anderen Stoffen bestehen kann, bildet an dem Profilstrang 5 eine Zone erhöhter Gleitfähigkeit und verschafft dadurch der Glasscheibe 6 eine ihre Gleitbewegung begünstigende Berührungsfläche an den in seinen freiliegenden Gummiaußenflächen vergleichweise stark reibenden Profilstrang. Wie die Darstellung in der Zeichnung erkennen läßt, ist der Belagstreifen nicht als querschnittserweiternde Auflage auf die Strangoberfläche aufgesetzt, sondern vielmehr mit Einbettung seiner Randkanten in die Außenkonturen des Strangprofils einbezogen, was neben einer mechanischen Verankerung als Folge der mit dem Herstellvorgang eingehenden starken Pressung günstige Voraussetzungen für eine besonders festhaftende stoffschlüssige Verbindung bietet.

Zum Herstellen solcher Zweistoff-Profilstränge 5, 15 können Strangpressen üblicher Bauart aber mit den in Fig. 2, 3 und 4 verdeutlichten zusätzlichen Einrichtungen Verwendung finden. Der Übersichtlichkeit halber ist auf die Wiedergabe vollständiger Strangpressen verzichtet und in der Zeichnung nur das zum Verständnis der Erfindung Wesentliche dargestellt:

Der Pressenkopf 7 gemäß Fig. 2 bildet den Austrittsteil einer an sich bekannten Strangpresse, in den die plastifizierte Kautschukmischung vorgeschoben ist und aus dem sie unter der Einwirkung der Preßschnecke kontinuierlich durch das abschließende Mundstück 8 mit der formgebenden Strangpreßdüse 9 ausgepreßt wird. Eine in Form eines Rohres oder einer Blechmulde ausgebildete Führungsbahn 10 ist unter einem spitzen Winkel in Schrägrichtung so an den Pressenkopf 7 angesetzt, daß sie das knickfreie Einlaufen des Belagstreifens 15 von einer nicht gezeichneten Abwickeltrommel im Sinne des Pfeiles I in das Innere des Pressenkopfes bis unmittelbar vor die Strangpreßdüse 9 und zur Vereinigung mit der in die Düse eintretenden plastischen Preßmasse ermöglicht. Mit dem Ausformen des Strangprofiles in der Düse werden die beiden Strangkomponenten fest aneinandergepreßt, und der fertig ausgeformte Zweistoffstrang 5, 15 verläßt die Strangpreßdüse 9 als einheitliches Gebilde in Richtung des Pfeiles II, um je nach den Umständen entweder unmittelbar anschließend ohne zwischenzeitliche Abkühlung oder zu einem späteren Zeitpunkt nach erneutem Aufheizen der Vulkanisation unterworden zu werden.

An den in Fig. 3 gezeichneten Pressenkopf 7 ist die Führungsbahn 10 von vorn entgegen der Preßrichtung unmittelbar an die die Strangpreßdüse 9 enthaltende Mundstückplatte 8 angesetzt, was eine Umlenkung der Zuführrichtung (Pfeil 1) für die Belagstreifen im innern des Pressenkopfes um einen Winkel von etwa 180° bedingt. Gegenüber der Ausführungsform nach Fig. 2 hat diese Konstruktion den Vorteil, daß das Gehäuse des Pressenkopfes selbst baulich nicht betroffen und Betriebsumstellungen durch einfaches Auswechseln der Mundstückplatte 8 möglich sind. Das gleiche gilt im wesentlichen auch für die in Fig. 4 gezeichnete Ausführungsform, die für den Umlenkbereich der ebenfalls von vorn an die Mundstückplatte 8 angesetzten Führungsbahn 10 eine drehbeweglich gelagerte Umlenkrolle 11 vorsieht. Es versteht sich, daß anstelle der Umlenkrolle 11, auch ein starres Gleitstück oder ein anderes fest angebrachtes Umlenkelement Verwendung finden könnte.

**Patentanspruch**

Verfahren zum Herstellen von Dichtungsstreifen und ähnlichen Profilsträngen aus Kautschuk und/oder kautschukartigen Elastomeren mit in Teilbereichen ihres Querschnittsumfanges in haftende Verbindung gebrachten und über ihre ganze Länge durchlaufenden Belagstreifen aus andersartigen Stoffen unter Verwendung einer Strangpresse mit einer formgebenden Strangpreßdüse, wobei der Belagstreifen (15) unter Verwendung einer Leitvorrichtung (10) in der Strangpreßdüse (9) oder in deren unmittelbarem Bereich mit dem Kautschuk- bzw. Elastomerstrang (5) zusammengeführt und mit diesem vereinigt und der so gebildete Profilstrang vulkanisiert wird, dadurch gekennzeichnet, daß ein aus einer Kunststoffolie gebildeter Belagstreifen (15) verwendet wird, der an seiner Außenoberfläche gleitfähig und an seiner dem Kautschuk- bzw. Elastomerstrang (5) zugekehrten Innenfläche haftfähig ist, und daß dieser Belagstreifen (15) oberflächenbündig so in die Oberfläche des Kautschuk- bzw. Elastomerstranges (5) eingebettet wird, daß seine Seitenkanten vollständig vom Material des Kautschuk- bzw. Elastomerstranges (5) umfaßt werden.

## Revendication

Procédé de fabrication de bandes d'étanchéité et profilés analogues en caoutchouc et/ou élastomères analogues au caoutchouc avec une bande de garniture disposée sur toute la longueur en liaison très solide avec une partie de la périphérie du profilé, qui est en une autre matière et sont réalisés en utilisant une presse extrudeuse avec une buse d'extrusion qui donne la forme, dans lequel la bande de garniture (15) est rapprochée à proximité immédiate du profile de caoutchouc ou d'élastomère (5) en utilisant une voie d'introduction (10) dans la buse d'extrusion (9) ou au voisinage immédiat à celle-ci, et elle est unie audit profilé, et le profilé ainsi obtenu est vulcanisé, caractérisé en ce qu'on utilise une bande de garniture (15) constituée d'une feuille de matière plastique qui est glissante sur une face externe et est adhérente sur sa face interne dirigée du cité du profilé de caoutchouc ou d'élastomère (5), et que cette bande de garniture (15) est incluse par sa surface dans la surface du profilé de caoutchouc ou d'élastomère (5), de telle sorte que ses bords latéraux soient complètement entourés par le matériau du profilé de caoutchouc ou d'élastomère (5).

## Claim

Method of producing sealing strips and similar extruded profiles from rubber and/or rubber-like elastomers, having cover strips which are brought into adhesive connection in some regions of their cross-sectional circumference and pass over their entire length, the cover strips being formed from different kinds of materials, by utilisation of an extruder having a form-shaping extrusion nozzle, whereby the cover strip (15), utilising a guide mechanism (10) in the extrusion nozzle (9) or in the immediate vicinity thereof, is combined with the rubber or elastomer extruded body (9) and is joined thereto, and the extruded profile thus formed is vulcanised, character ised in that a cover strip (15) is used, which is formed from a plastics material film and which is slidable at its external surface and is adherent at its inner face facing the rubber or elastomer extruded body (5), and in that this cover strip (15) is so embedded in the surface of the rubber or elastomer extruded body (5) in a surface-flush manner that its lateral edges are completely surrounded by the material of the rubber or elastomer extruded body (5).

FIG. 1

FIG. 2

FIG. 3

FIG. 4